# EUROPEAN PATENT SPECIFICATION

(11) **EP 1 009 976 B1**
(45) Date of publication and mention of the grant of the patent: **22.08.2001**
(21) Application number: 97948002.7
(22) Date of filing: 28.11.1997
(51) Int. Cl.: G01F 11/02, G05D 7/06

(54) **DOSING APPARATUS**
DOSIERVORRICHTUNG
APPAREIL DE DOSAGE

(30) Priority: 28.11.1996 NL 1004637
(43) Date of publication of application: 21.06.2000
(73) Proprietor: Van Beek, Daniel, 6603 DV Wychen (NL); Faasse, Marinus, Abraham, 5161 PJ PJ Sprang-Capelle (NL)
(72) Inventor: Van Beek, Daniel, 6603 DV Wychen (NL); Faasse, Marinus, Abraham, 5161 PJ PJ Sprang-Capelle (NL)
(74) Representative: Valkonet, Rutger
(86) International application number: NL9700655
(87) International publication number: WO9823932

(56) References cited:
- BE-A- 1 002 318
- DE-A- 3 510 110
- US-A- 3 756 456
- US-A- 4 255 088

## Description

The present invention relates to an apparatus for dosing liquid or gas comprising a drivable piston/cylinder combination, which piston/cylinder combination is connected to an inlet channel for the intake of a liquid or gas to be dosed, and to an outlet channel for the liquid or gas to be dosed.

Such an apparatus is generally known, it is used in situations and processes which require the dosing of liquids or gases.

When liquids or gases are to be dosed precisely it is known to transport a liquid or gas from a buffer storage to an outlet channel by means of a pump. The dosed amount of liquid or gas is registered by means of a sensor, whereby a dosing valve in the outlet channel is closed by means of control signals once the dosing of the intended amount of liquid or gas has been completed. Said dosing valve is usually an electro-magnetic on/off solenoid valve. One drawback of such a construction is the occurrence of hydrodynamic phenomena in the apparatus, such as the formation of air bubbles in the liquid to be dosed on the suction side of the pump, as well as the occurrence of a substantial pressure build-up on the delivery side of the pump following the closure of the dosing valve. In addition to that a dosing valve (for example an electro-magnetic on/off solenoid valve) exhibits a delay between the receipt of the control signal and the actual closure, which delay, in combination with the aforesaid hydrodynamic phenomena, makes the dosing of liquid or gas and the apparatus inaccurate.

Furthermore said hydrodynamic phenomena and the strong pressure fluctuations within the system cause damage to the sensor and to the dosing valve, whilst the electro-magnetic on/off solenoid valves that are used make the apparatus costly and complicated as regards its control.

In another embodiment the pump unit may be replaced by a drivable piston/cylinder combination, which takes in liquid or gas from a buffer storage in a first stroke, and which doses liquid or gas via the outlet channel in a second stroke. Also in this embodiment similar effects occur, which have an adverse effect on the dosing operation.

The object of the invention is to obviate the above drawbacks and to provide an apparatus which, in addition to being inexpensive and of simple construction, also enables a very precise dosing of liquid and gas.

In order to accomplish that objective the apparatus is characterized in that the apparatus comprises at least one sensor, which sensor controls the driving of the piston/ cylinder combination by delivering signals which are a measure of the dosed amount of liquid or gas. An inexpensive and simple apparatus, which also enables precise dosing, is obtained by controlling the driving of the piston/cylinder combination in dependence on the dose rather than using a costly and complicated electro-magnetic on/off solenoid valve according to the prior art. In addition to that the sensor may be positioned in the outlet channel and/or in the inlet channel of the apparatus. This makes it possible to control the driving of the piston/cylinder combination in dependence on the amount of liquid or gas taken in, or, and more particularly so, on the amount of dosed liquid or gas.

According to another aspect of the invention the inlet channel and the outlet channel are each provided with at least one valve, in particular a non-return valve. Said non-return valves are of simple construction and do not require external control.

According to another aspect of the invention the piston of the piston/cylinder combination may be connected to a pneumatic or to an electric drive unit. Such drive units are of simple and reliable construction and are easy to control. Furthermore they prevent the occurrence of hydrodynamic effects and pressure fluctuations within the system, as a result of which a precise dosing of liquid or gas is obtained.

According to another aspect of the invention the apparatus comprises a control unit, which compares the dosed amount of liquid or gas with a predetermined desired dose, and which controls the driving of the piston/cylinder combination in response thereto. A very precise dosing of liquid or gas is obtained by controlling the driving of the piston/cylinder combination in dependence on a predetermined desired dose.

The present invention will be explained in more detail hereafter with reference to a drawing, which shows an embodiment of a dosing apparatus.

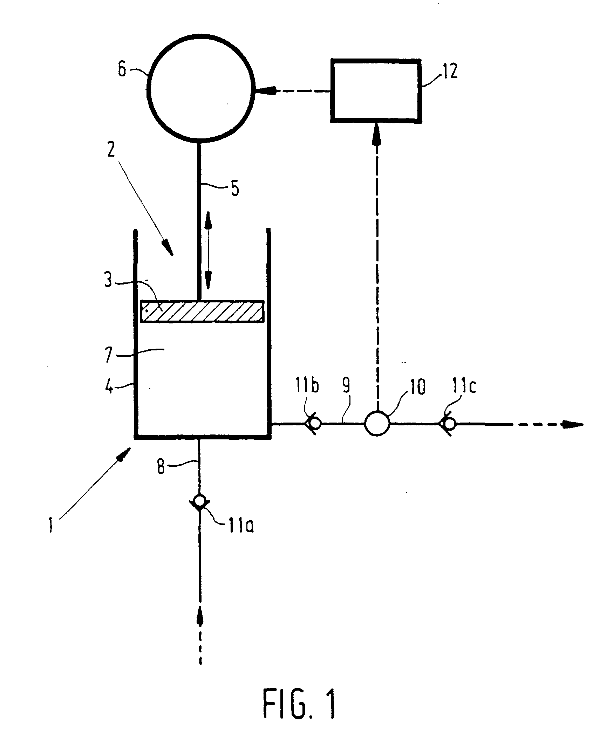

Figure 1 shows a dosing apparatus 1 according to the present invention.

Apparatus 1 comprises a piston/cylinder combination 2 consisting of a piston 3 and a cylinder 4. Piston 3 is capable of reciprocating movement within cylinder 4 and is connected to a drive unit 6 by means of a piston rod 5. Drive unit 6 may be a pneumatic or an electric drive unit. Such drive units are of simple construction and enable direct and precise control. Piston 3 can be vertically reciprocated in cylinder 4 by means of drive unit 6. Piston 3 and cylinder 4 enclose an adjustable chamber 7. Connected to piston/ cylinder combination 2 are an inlet channel 8 and an outlet channel 9, which open into chamber 7. A sensor 10, in the form of a flow sensor in this embodiment, is disposed in outlet channel 9. Valves 11a and 11b, 11c respectively, which valves are preferably non-return valves, are disposed in inlet channel 8 and outlet channel 9 respectively. Preferably valve 11b is placed before sensor 10 in outlet channel 9, whilst valve 11c is placed after sensor 10, but it is also possible to use only one non-return valve placed before or after sensor 10 in outlet channel 9. The operation of the apparatus is as follows.

Piston/cylinder combination 2 and/or outlet channel 8 are usually placed in a buffer storage (not shown), in which an ample amount of liquid or gas to be dosed is present. In the starting situation piston 3 occupies its lowermost position, in which position the chamber 7 enclosed by piston 3 and cylinder 4 has its smallest capacity. When piston 3 is moved upwards by means of drive unit 6, the piston/cylinder combination 2 draws in liquid or gas from the buffer storage via inlet channel 8. Preferably chamber 7 is completely filled with liquid or gas by moving piston 3 completely upwards. The dosing of liquid or gas is started as soon as the intake of liquid or gas in chamber 7 of piston/cylinder combination 2 is completed. To that end drive unit 6 moves piston 3 downwards, so that the liquid or gas present in chamber 7 is displaced from chamber 7 via outlet channel 9. During the downward movement of piston 3 the sensor 10 disposed in outlet channel 9 registers the amount of liquid or gas that passes sensor 10 through outlet channel 9. Sensor 10 constantly delivers signals to control unit 12 while the dosing of liquid or gas is taking place. The signals delivered by sensor 10 are a measure of the amount of liquid or gas being dosed at that moment, which signals are compared with a predetermined desired value by control unit 12. Said predetermined desired value indicates a desired amount of liquid or gas. As soon as the amount of liquid or gas registered by sensor 10 corresponds with a predetermined desired value, control unit 12 will deliver a control signal to drive unit 6, as a result of which the movement of piston 3 and the dosing of liquid or gas will be stopped immediately.

The pressure within the system will immediately drop and the transport of liquid or gas through outlet channel 9 will be stopped. As a result of the fact that sensor 10 controls the driving of piston 3 in this manner, the occurrence of hydrodynamic phenomena or pressure fluctuations in the outlet channel is prevented. This enables a precise dosing of liquid or gas, this in contrast to prior art embodiments, which use an electro-magnetic on/off solenoid valve as the controlled dosing valve. Non-return valves 11a and 11b, 11c respectively are mounted in inlet channel 8 and outlet channel 9 respectively, in such a manner that the non-return valve 11a present in inlet channel 8 will open and the non-return valves 11b and 11c present in outlet channel 9 will remain closed when liquid or gas is being drawn in from the buffer storage, whilst the non-return valve 11a present in inlet channel 8 will close and the non-return valves 11b and 11c present in outlet channel 9 will open when liquid or gas is being dosed from chamber 7. The moment the desired amount of liquid or gas to be dosed has been registered by sensor 10, and drive unit 6 stops moving piston 3 downward in response to a control signal from control unit 12, the pressure in outlet channel 9 will drop and non-return valves 11b and 11c will close automatically. In this way liquid or gas that has already been dosed is prevented from flowing back into outlet channel 9, so that inaccurate dosing of liquid or gas is avoided. Since non-return valves are disposed in outlet channel 9 both before and after sensor 10, liquid or gas will be trapped in outlet channel 9 after the closure of the two valves 11b and 11c. Thus disturbances from outside or disturbances within the system cannot cause any pressure fluctuations in this part of outlet channel 9, thus preventing damage to valves 11b and 11c and to sensor 10, as well as undesirable displacements of liquid or gas in outlet channel 9 and the consequent registrations by sensor 10. Because the pressure within the system will drop as a result of the drive unit 6 being turned off, there will be no pressure fluctuations which might damage sensor 10 and non-return valves 11a, 11b and 11c.

Piston 3 can be moved upwards by turning on drive unit 6 by means of another control signal from control unit 12, thus enabling the intake of liquid or gas into chamber 7 from the buffer storage. To that end the non-return valve 11a present in inlet channel 8 will open, whilst the non-return valves 11b and 11c present in outlet channel 9 will remain closed. Thus the dosed liquid or gas is prevented from flowing into outlet channel 9 via non-return valves 11b and 11c during the intake of liquid or gas from the buffer storage. Following the intake of the liquid or gas to be dosed, drive unit 6 may move piston 3 downward again in response to another control signal from control unit 12, so that the liquid or gas present in chamber 7 is dosed via outlet channel 9. The non-return valve 11a present in inlet channel 8 will close thereby, and the non-return valves 11b and 11c present in outlet channel 9 will open. Sensor 10 will register the amount of liquid or gas that has been dosed and deliver corresponding signals to control unit 12, where said signals will be compared with a predetermined, possibly different desired value.

It will be apparent that a very precise dosing of liquids or gases can be realized by means of the present apparatus. Highly accurate doses can be obtained by controlling the driving of a piston/cylinder combination by means of a signal delivered by the sensor, whilst at the same time avoiding hydrodynamic phenomena and disadvantageous pressure fluctuations. The dosing of liquid or gas may be repeated, if desired, whereby each amount of dosed liquid or gas that is registered by sensor 10 is compared with a predetermined desired value stored in control unit 12. Said predetermined desired value may be changed at will. The maximum dose of liquid or gas is determined inter alia by the construction and the dimensions of piston/cylinder combination 2. Control unit 12 may for example be a personal computer or a PLC. Control unit 12 may be programmed in such a manner that it takes into account any (dynamic) lagging effects that may occur in the apparatus during the dosing of liquid or gas. This enables control unit 12 to control drive unit 6 in such a manner when the desired amount of dosed liquid or gas is being registered, or nearly so, that the eventual desired dose is precisely obtained.

Piston 3 can be moved by drive unit 6 in such a manner that a particular dosing speed can be achieved, which speed is maintained for a particular period of time. By controlling drive unit 6 and piston 3 in this manner an accurate dosing of the liquid or gas can be obtained. Furthermore, due to the controlled movement of piston 3 there will be no hydrodynamic effects or disadvantageous pressure fluctuations, which may cause damage to sensor 10 and non-return valves 11a, 11b and 11c.

In another embodiment sensor 10 may be disposed in inlet channel 8, so that piston/cylinder combination takes in a predetermined amount of liquid or gas under the control of sensor 10, control unit 12 and drive unit 6, after which said amount of liquid or gas can easily, and possibly quickly, be dosed.

Piston/cylinder combination 2 may be a double-chamber piston/cylinder combination.

## Claims

1. Apparatus (1) for dosing liquid or gas comprising a drivable piston/cylinder combination (2), which piston/ cylinder combination is connected to an inlet channel (8) for the intake of a liquid or gas to be dosed, and to an outlet channel (9) for the liquid or gas to be dosed and also comprising a control unit (12) connected to the driving (6) of the piston/cylinder combination (2), which unit (12) compares a dosed amount of liquid or gas with a predetermined desired dose, characterized in that the apparatus comprises at least one sensor (10), which sensor is placed in the flow of liquid or gas to be dosed and which controls during dosing the driving (6) of the piston/cylinder combination by delivering signals to the control unit (12), which signals are a measure of the dosed amount of liquid or gas.

2. Apparatus according to claim 1, characterized in that said sensor (10) is disposed in the outlet channel (9).

3. Apparatus according to claim 1 or 2, characterized in that said sensor (10) is disposed in the inlet channel (8).

4. Apparatus according to any one of the preceding claims, characterized in that said inlet channel (8) and said outlet channel (9) are each provided with at least one valve, in particular with a non-return valve (11a, 11b, 11c).

5. Apparatus according to any one of the claims 1 - 4, characterized in that said piston (5) is connected to a pneumatic drive unit.

6. Apparatus according to any one of the claims 1-4, characterized in that said piston (5) is connected to an electric drive unit.

## Patentansprüche

1. Vorrichtung (1) zum Dosieren einer Flüssigkeit oder eines Gases, umfassend eine antreibbare Kolben/Zylinder-Zusammenstellung (2), welche Kolben/Zylinder-Zusammenstellung mit einem Einlasskanal (8) für den Einlass einer zu dosierenden Flüssigkeit oder eines zu dosierenden Gases und mit einem Auslasskanal (9) für die zu dosierende Flüssigkeit bzw. das zu dosierende Gas verbunden ist, und ferner umfassend eine mit der Antriebseinrichtung (6) der Kolben/Zylinder-Zusammenstellung (2) verbundene Steuereinheit (12), welche Einheit (12) eine dosierte Flüssigkeits- oder Gasmenge mit einer vorbestimmten, gewünschten Dosis vergleicht, **dadurch gekennzeichnet, daß** die Vorrichtung wenigstens einen Messfühler (10) aufweist, welcher Messfühler in der Strömung der zu dosierenden Flüssigkeit oder des zu dosierenden Gases angeordnet ist und die Antriebseinrichtung (6) der Kolben/Zylinder-Kombination während der Dosierung durch Abgeben von Signalen an die Steuereinheit (12) steuert, welche Signale ein Mass für die dosierte Flüssigkeits- oder Gasmenge sind.

2. Vorrichtung nach Anspruch 1, **dadurch gekennzeichnet, daß** der Messfühler (10) in dem Auslasskanal (9) angeordnet ist.

3. Vorrichtung nach Anspruch 1 oder 2, **dadurch gekennzeichnet, daß** der Messfühler in dem Einlasskanal (8) angeordnet ist.

4. Vorrichtung nach einem der vorhergehenden Ansprüche, **dadurch gekennzeichnet, daß** der Einlasskanal (8) und der Auslasskanal (9) jeweils mit wenigstens einem Ventil, insbesondere mit einem Rückschlagventil (11a, 11b, 11c) versehen ist.

5. Vorrichtung nach einem der Ansprüche 1 - 4, **dadurch gekennzeichnet, daß** der Kolben (5) mit einer pneumatischen Antriebseinheit verbunden ist.

6. Vorrichtung nach einem der Ansprüche 1 - 4, **dadurch gekennzeichnet, daß** der Kolben (5) mit einer elektrischen Antriebseinheit verbunden ist.

## Revendications

1. Dispositif (1) pour doser un liquide ou un gaz comprenant une combinaison piston/cylindre (2) pouvant être entraînée, laquelle combinaison piston/cylindre est reliée à un canal d'entrée (8) permettant l'entrée d'un liquide ou d'un gaz devant être dosé, et à un canal de sortie (9) du liquide ou du gaz devant être dosé et comprenant également une unité de commande (12) reliée au dispositif d'entraînement (6) de la combinaison piston/cylindre (2), laquelle unité (12) compare une quantité de liquide ou de gaz dosée à une dose souhaitée prédéterminée, caractérisé en ce que le dispositif comprend au moins un capteur (10), lequel capteur est disposé dans l'écoulement de liquide ou de gaz devant être dosé et commande, pendant le dosage, le dispositif d'entraînement (6) de la combinaison piston/cylindre en délivrant des signaux à l'unité de commande (12), lesquels signaux représentent une mesure de la quantité de liquide ou de gaz dosée.

2. Dispositif selon la revendication 1, caractérisé en ce que ledit capteur (10) est disposé dans le canal de sortie (9).

3. Dispositif selon la revendication 1 ou 2, caractérisé en ce que ledit capteur (10) est disposé dans le canal d'entrée (8).

4. Dispositif selon l'une quelconque des revendications précédentes, caractérisé en ce que chacun dudit canal d'entrée (8) et dudit canal de sortie (9) est pourvu d'au moins un robinet, en particulier d'un robinet anti-retour (11a, 11b, 11c).

5. Dispositif selon l'une quelconque des revendications 1 à 4, caractérisé en ce que ledit piston (5) est relié à une unité d'entraînement pneumatique.

6. Dispositif selon l'une quelconque des revendications 1 à 4, caractérisé en ce que ledit piston (5) est relié à une unité d'entraînement électrique.
